# EUROPÄISCHE PATENTANMELDUNG

(11) **EP 1 859 885 A1**
(43) Veröffentlichungstag der Anmeldung: **28.11.2007**
(21) Anmeldenummer: 07010020.1
(22) Anmeldetag: 21.05.2007
(51) Int. Cl.: B23H 9/00

(54) **Verfahren zur Herstellung von Zahnrädern Verzahnungssystemen und zueinander relativ bewegten Komponenten mit optimierter Geometrie und verbesserten tribologischen Eigenschaften sowie Einrichtungen dazu**

(30) Priorität: 22.05.2006 EP 06010559
(71) Anmelder: Eckschlager, Anton, 5301 Eugendorf (AT)
(72) Erfinder: Eckschlager, Anton, 5301 Eugendorf (AT)

(57) **Zusammenfassung**

Ein Verfahren zur präzisen Herstellung einer Kombination aus passgenauen Teilen zur Kraft- und Bewegungsübertragung wird vorgestellt. Dieses ist dadurch gekennzeichnet, dass in einem elektrolytischen Bad ein Teil dieser Kombination als Anode unter Zuhilfenahme des anderen bereits vorgeformten Teils als Kathode definiert unter dreidimensionaler Führung der Kathode (s.a Abbildung FIG. 1), sowie gegenläufiger Bewegung der Teile elektrochemisch aufgelöst und dadurch mit der von der Kathode vorgegebenen Form definiert strukturiert wird. Die Vorformung der Kathode erfolgt durch verschiedene bekannte spanabhebende, drahterosive oder elektrochemische Bearbeitungsmethoden. Das erfindungsgemäße Verfahren selbst gestattet die präzise elektrochemische Bearbeitung des als Anode definierten Werkstücks, wie z.B. Edelstähle, nicht oder schwer spanabhebend bearbeitbare Hochleistungswerkstoffe und Hartmetalle. Die Präzision bzw. erzielbare weitere Produkteigenschaften und -funktionalitäten der Kombination aus passgenauen Teilen erfolgen auf Basis der Prozessfuhrung und -parameter.

## Beschreibung

### Einleitung

Die Serien- und Prototypenherstellung von Zahnrädern und Zahnradpaarungen basieren primär auf spanabhebenden Techniken, wie sie z.B. in der Literatur (erwähnte Literatur ist Standard-Literatur für die allgemeine Herstellung von ZR's)¹,²,³ und in den Patentschriften
Nr. US 5,288,179, US 5,411,431, US 5,622,459, US 5,931,612 beschrieben werden. Die Nachteile dieser Verfahren, wie lokale thermische Belastung des Basiswerkstoffs und damit lokale Veränderung seiner Stoffeigenschaften, lange Bearbeitungszeiten, beschränkte Realisierbarkeit komplexerer Zahnformen und Beschränkung auf leicht bearbeitbare Materialien, aufwändige und unflexible Werkzeugerstellung und -optimierung, sind trotz enormer Fortschritte in der Umsetzung verbesserter Werkzeuge und Bearbeitungseinrichtungen nur in geringem Umfange vermeidbar.
Abtragende Verfahren unter Einsatz von Hochspannungsentladungen, wie z.B. Funken-, Senk- oder Drahterosionsverfahren und deren Kombination, können ebenfalls zur Herstellung von präzisen Strukturen, Löchern und Kavitäten und etc. verwendet werden, weisen aber den Nachteil langer Bearbeitungszeiten und eingeschränkter 3D-geometrischer Flexibilität sowie eingeschränkter Großserientauglichkeit auf.
Auf pulvermetallurgische Verfahren basierende Herstellungstechniken wieder sind nur auf den Einsatz weniger Materialien beschränkt und können speziell bei kleinen Teilen nur mit einem Verlust an Präzision und entsprechend großer Stückzahl wirtschaftlich eingesetzt werden.
Die meisten Herstellungsverfahren sind mit einer thermischen Behandlung und dadurch bedingten Form- und Gefügeveränderung verknüpft, wodurch in vielen Fallen die gewünschten Dimensionstoleranzen nur nach umfangreichen Vorversuchen erreichbar erscheinen. Für die Erzielung von definierten Oberflächeneigenschaften (Rauheit, Dichte, Benetzbarkeit etc.) müssen die Oberflächen dann entsprechend nachbearbeitet werden. Dies gilt auch für mechanisch hergestellte Teile und Teilkombinationen, speziell wenn bestimmte tribologische Eigenschaften der in Kontakt stehenden Oberflächen gewährleistet sein müssen.
Ein ganz wesentlicher Nachteil mechanisch hergestellter Verzahnungen und Zahnkonstruktionen, besonders für schnelllaufende und möglichst lämarme Kontaktpaarungen, besteht darin, dass die Passung zwischen den Paarungen nur maximal mit der Toleranz der eingesetzten Fertigungsanlagen optimiert werden kann, ein Umstand, der zu erhöhter Lärmentwicklung, starkem Verschleiß an den Zahnflanken und beschränkter Nutzungsdauer führt.
¹ Karlheinz Roth, Zahnradtechnik- Fvolvenren-Sondervuzahnungen zur Getriebeverbesserung, Springer-Verlag, 1998.
² DIN-Taschenbuch, Zahnradfertigung
³ T. Bausch, Zahnradfertigung Teil A, Teil B, Band 175, Kontakt&Studium, expert verlag, 1986.

Eine Zielsetzung des erfindungsgemäßen Verfahrens besteht darin, diese Nachbearbeitungsprozesse grundsätzlich zu vermeiden und bereits im Verlauf des erfindungsgemäßen Verfahrens entsprechend optimierte Materialeigenschaften, Oberflächenqualitäten und-einstellungen sicherzustellen.
Eine weitere Zielsetzung des erfindungsgemäßen Verfahrens liegt in der Herstellung optimal angepasster Zahn-Zahn-Paarungen, wodurch wesentlich bessere tribologische Eigenschaften und längere Nutzungsdauern der jeweiligen Produkte zu erzielen sind.
Zusätzlich lässt sich die Oberflächenbeschaffenheit hinsichtlich Rauhigkeit und Benetzbarkeit auf der Submikroskala in den letzten Arbeitsschritten durch definierte Kombination der Prozessparameter einstellen, um beispielsweise optimale tribologische Voraussetzungen und auch Schmiermittelhaftung zu gewährleisten. Weiter können zur "funktionellen Einstellung" der Werkstückoberflächen, wie z.B. Schmiermittelhaftung, Einlaufbeschichtung, etc. mittels eingebrachter Hilfselektroden in weiteren Verfalzenschritten galvanische Prozesse durchgeführt werden und galvanisch abgeschiedene Überzüge aufgebracht werden. Weniger harte Überzüge können für ein gutes Einlaufen dienen und werden im weiteren Betrieb "abgenützt". Mit der entsprechenden Wahl der eingesetzten Elektrolyten und definierter Prozessparameter wird beispielsweise bei Mehrphasenlegierungen eine selektive Herauslösung auf Gitterebene oder in größerem Maßstab möglich, die auch wiederum zu einer gezielten Strukturierung der Oberfläche fuhrt (harte Karbide herauslösen und Initialbruchstellen vermeiden). Definierte Oberflächenstrukturicrung ermöglicht in anschließenden Arbeitsschritten die Auf- und Einbringung von tribologisch wirksamen Werkstoffen wie z.B. Graphit, Teflon, Molybdänsulfid etc. und Kombinationen von denselben.

Die gegenständliche Erfindung betrifft die Einrichtung eines verbesserten, automatisierbaren und kontinuierlich arbeitenden Herstellungsverfahrens von Zahnradpaarungen auf der Basis sogenannter "electrochemical machining" Prozesse unter Verwendung empirisch und simulationstechnisch optimierter Werkzeuge und mit hoher Flexibilität und Qualität. Das gegenständliche Verfahren basiert auf einem geschlossenen Kreislauf und ist ökologisch optimiert.

Im gegenständlichen, erfindungsgemäßen Verfahren werden Zahnräder und Zahnradpaarungen mit hoher Präzision und mit hoher Oberflächenqualität hergestellt. Das erfindungsgemäße Verfahren beruht darauf, dass das zu bearbeitende und zu formende Material in einer elektrochemischen Zelle in Kontakt mit einem Elektrolyten als Anode geschalten wird und mit Hilfe einer entsprechend geformten Kathode eine definierte Struktur durch Auflösen von Material aufgeprägt bzw- erzeugt wird. Durch Anlegen einer geeigneten Spannung (Gleichspannung und/oder gepulste Spannung) wird das Material der Anode in einem auf das jeweils zu bearbeitende Material abgestimmten Elektrolyten definiert aufgelöst, wobei die Auflösungsgeschwindigkeit primär von der Zusammensetzung, der Temperatur und der Strömungsgeschwindigkeit des Elektrolyten, der angelegten Spannung und der Form der Kathode abhängt.
Durch geeignete Auflegung und Führung der Kathoden gelingt es, unterschiedliche Strukturen und funktionelle Teile auch kleiner Dimension (z.B. gekrümmte Sacklöcher oder gekrümmte Strömungskanäle in Turbinenschaufeln) mit hoher Präzision herzustellen.

Die wesentlichen Vorteile dieser Technik bestehen in:
der weitgehenden Unversehrtheit des Basismaterials nach der Formgebung,
   (keine Änderung der mechanischen oder physikalischen Eigenschaften durch lokale Wärmeeinflüsse - Temperaturerhöhung, wie sie bei klassischen spanabhebenden Verfahren auftreten)
der hohen Präzision der Formgebung auch in sehr kleinen Dimensionen,
   (Strukturen im Bereich von unter 5 µm sind mit den im erfindungsgemäßen Verfahren eingesetzten Mikroelektroden bzw. Mikro-Jet-Einrichtungen produzierbar)
der hohen Prozesssicherheit, Reproduzierbarkeit, Flexibilität und Automatisierbarkeit
   (bei gleichen Arbeitsbedingungen und gleichen zu bearbeitenden Materialien ist z.B. für eine andere Form nur die Kathode zu wechseln)
dem Wegfallen einer mechanischen und/oder thermischen Nachbehandlung der Teile wie z.B. Entgraten,
   (die Oberflächen der mit dem erfindungsgemäßen Verfahren hergestellten Teile sind wesentlich glatter und weitgehend ohne Drehriefen im Vergleich zu den Produkten einer spanabhebenden Bearbeitung und können auch gezielt eingestellt und mikrostrukturiert werden).

Die Herstellung unterschiedlicher Strukturen, Rauheiten und Oberflächenqualitäten gelingt durch das Anlegen eines definierten elektrischen Feldes, durch Variation des Elektrolyten und der Menge des in der Zeiteinheit vorbeiströmenden Elektrolyten, durch Kombination geeigneter Anionen sowie durch Variation der Temperatur. Speziell durch Pulsen der angelegten Spannung (Spannungsspitzen bis über 300 V) in definierter Art und Weise können die Phasen der feldunterstützten selektiven Auflösung von Teilen des zu bearbeitenden Materials gezielt gesteuert werden, wodurch die Möglichkeit einer signifikanten Verringerung der Bearbeitungszeiten bei gleichbleibender oder sogar verbesserter Präzision geschaffen wird.

Als weiterer Vorteil des erfindungsgemäßen Verfahrens kann die Herstellung deutlich besserer Oberflächenqualitäten angegeben werden. Bewegt man sich in Potentialbereichen der aktiven Auflösung der Materialkomponenten, können in einem mehr oder weniger einstufigem Verfahren (abhängig von der Oberflächenqualität und der Zusammensetzung des Ausgangsprodukts) selbst bei höheren Abtragungsraten "Elektropolier"-Effekte erzielt werden. Durch die elektrochemische Bearbeitung werden zudem die vorher dem Material "mitgegebenen" Eigenschaften (z.B. Härte oder Duktilität) nicht verändert, die Notwendigkeit einer Nachhärtung fällt weg.

Das erfindungsgemäße Verfahren bietet als weiteren wesentlichen Vorteil die Möglichkeit, Zahnradpaarungen hinsichtlich Zahnausformung und Präzision so zu verbessern, dass die Standzeiten der Paarung aufgrund von optimaler Passung der Kraftübertragung trotz signifikant geringerem Schmiermitteleinsatz signifikant verbessert werden. Durch die Variation der Prozessparameter des erfindungsgemäßen Verfahrens wie Elektrolytzusammensetzung, Elektrolytbewegungen, Stromprogramm und Temperatur können unterschiedliche Strukturen, Rauheiten und Oberflächenqualitäten je nach Anforderung an die Zahn-Kontaktstelle hergestellt werden.

### Beschreibung

Im erfindungsgemäßen Verfahren werden passgenaue Kombinationen von Werkstücken hergestellt, die über entsprechende Bewegungsabläufe zur rotierenden Übertragung von Kräften eingesetzt werden können. Aus der Literatur und in den Patentschriften Nr. US 5,288,179, US 5,411,431, US 5,622,459, US 5,931,612 ist bekannt, dass für die rotierende Kraftübertragung bei hohen Rotationsgeschwindigkeiten eine optimale Form der Werkstücke existiert, diese aber aufgrund ihrer Komplexität mit klassischen Verfahren der spanabhebenden Bearbeitung oder über pulvermetallurgische Prozesse in vernünftigen Prozesszeiten nicht herstellbar ist.
Die Erfindung beruht nun darauf, dass das zu bearbeitende Material in einem Elektrolyten (z.B. für die Bearbeitung von Edelstahl wässrige NaCl oder NaNO₃ - Lösungen) anodisch polarisiert wird, wobei die jeweils gewünschte optimale komplexe Endform über die Form der kathodisch polarisierten Gegenelektrode und deren Bewegung in geeigneter Art und Weise sichergestellt wird.
Im erfindungsgemäßen Verfahren werden jetzt für die Herstellung der passgenauen Kombinationen nicht beliebige Kathoden, sondern Kathoden abgestimmt auf die Notwendigkeit der optimalen Strukturierung eingesetzt und in einer entsprechend konstruierten Vorrichtung dreidimensional präzise verfahren und bewegt.
Werden jetzt die beiden Werkstücke (Anode und Kathode) typischer weise mit einer Geschwindigkeit zwischen 20 und 0.1 Umdrehungen pro Minute rotiert und zudem die Kathode definiert entsprechend dem Abtrag der Anode in einem Abstand zwischen 0.01 mm und 1 mm, optimal in einem Abstand zwischen 0,02 und 0,4 mm mit einer typischen Geschwindigkeit zwischen 0,1 und 5 mm/min nachgeführt, der Elektrolyt zum Abtransport der sich lösenden Spezies mit Geschwindigkeiten bis zu 60 m.sec⁻¹ bewegt und ein geeignetes Stromprogramm (typischerweise Pulse mit einer Länge von unter 50 ms und einer Höhe bis zu 400 A/cm²) gefahren wird, ergeben sich nach dem Abtrag zwei passgenaue Werkstücke mit einer optimalen Struktur für die rotierende Übertragung von Kräften bei hohen Umdrehungsgeschwindigkeiten.
Das erfindungsgemäße Verfahren ist so ausgelegt, dass die jeweils passgenau herzustellenden Kraftübertragungsteile vorgefertigt in entsprechend geformten Halterungen geführt werden, und speziell bevorzugt die für die Kraftübertragung relevanten Bereiche elektrochemisch bearbeitet werden. Die präzise Halterung der Teile und ihre rotationssymmetrische Ausrichtung stellt einen essentiellen Teil des gesamten Verfahrens dar und ist Gegenstand einer getrennten Anmeldung für Schutzrechte.

### Ausführungsbeispiel Zahnradpaarherstellung

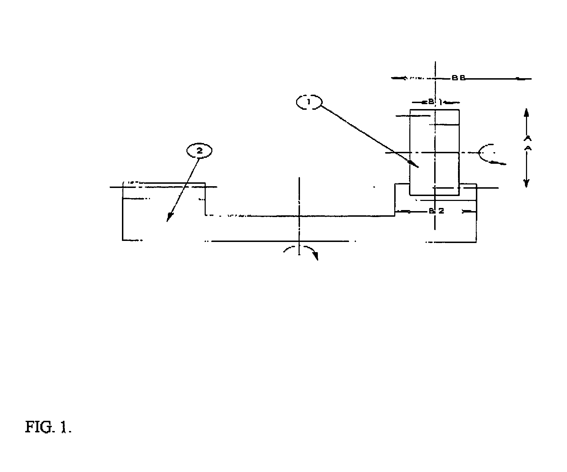

Bei diesem Verfahren wird ein mit bekannten Verfahren präzise hergestelltes Zahnrad (z.B. durch Abwälzfräsen, Torusfräsen, oder aber auch elektrochemisch hergestellt) als Werkzeug, Kathode, verwendet. Für nicht oder nur schwer spanend bearbeitbare Materialien (Hartmetalle, Werkzeugstähle, Kunststoffformenstähle) ist diese Kathode auch elektrochemisch (z.B. Micro-Jet-Verfahren) nach den bekannten Standardverfahren herzustellen. Die Kathode ist je nach gewünschter Zahnradpaarung, in der Abbildung 1 eine Kombination Ritzel mit Kronenrad, in der anschließenden Anwendung das Gegenrad, d.h. der elektrochemisch wirksame Teil des Werkzeugs und der Werkszeugform entspricht auch gleichzeitig einem Teil des Endproduktes.

In Schema 1 wird eine Ritzel-Kronenrad-Paarungsherstellung dargestellt. Zur Erreichung der maximalen theoretischen Präzision dieser Bauteilgruppe in ihrer Anwendung wird die Kathode, hier das Ritzel 1, während der Bearbeitung durch den "electrochemical machining" Prozesses in der dargestellten Form dem Rohling, das herzustellende Kronenrad, zugestellt.
Hier werden zwei Vorgehensweisen vorgestellt: a. Ist nicht die höchste erreichbare Präzision gefordert, so werden mit einer Kathode 1 als Werkzeug beliebig viele Gegenräder, hier Kronenräder 2, hergestellt, indem die ordnungsgemäß ausgeführte Kathode 1 (Breite B1 größer Breite B2) während der Bearbeitung in Bewegungsrichtung A-A dem Werkstück, hier das Kronenrad 2, zugestellt wird. Während des electrochemical machining Prozesses sind die Kathode 1 und die Anode 2 zueinander, mit in diesem Fall 90° zueinander gewinkelte und sich kreuzende Achsen, in rotierender Bewegung, entsprechend der gewünschten Getriebestufenübersetzung und mit Rotationsgeschwindigkeiten für einen optimal laufenden Prozess, und die Katode 1 wird in Bewegungsrichtung A-A gemäß den Prozessparametem zugestellt.
b. Für maximale Präzision wird das herzustellende Zahnrad, hier Kronenrad 2, mit dem zugehörigen Zahnrad, hier Ritzel 1, als Kathode anodisch bearbeitet. Das Ritzel 1 und das Kronenrad 2 werden entsprechend der Getriebestufenübersetzung zueinander rotiert und die Zustellung des "Werkzeugs" 1 erfolgt in Richtung B-B.

Entsprechende Vorgehensweise ist ausführbar für andere Zahnradpaarungen, wie z.B. herkömmliche Stimrad-Stimradkombinationen, Zahnstange mit Gegenrad, Kegelräder oder kegelige Räder und deren Kombinationen, aber auch nicht evolventenverzahnten und der Kraftübertragung dienenden mechanischen Komponenten.

Für die grobe Strukturierung mittels elektrochemical machining-Prozessen werden je nach zu bearbeitenden Material Standardelektrolyten, wässrige Lösungen aus Natriumchlorid und Natriumnitrat oder anorganische Säuren, oder auf das Material abgestimmte optimierte Elektrolyten, z.B. wässrige Lösungen wie Natriumhydroxidlösung für Hartmetalle, eingesetzt. Für die feinere Strukturierung der Oberfläche werden die Prozessparameter wie Temperatur, elektrische Pulsparameter (Gleich- und Wechselstrom) und Polaritäten von Werkzeug und Werkstück primär verändert. Bei komplexeren Anforderungen muss auch der Elektrolyt verändert werden, z.B. selektive Auslösung aus der Oberfläche von einer Materialkomponente.

Für anschließende galvanische Prozesse zwecks Beschichtung oder Überzugsherstellung ist dies aus Gründen der technischen Machbarkeit idealerweise in einem gesonderten Becken durchzuführen, mit der gleichen Automatisierungseinrichtung für hohe Präzision.

## Patentansprüche

1. Verfahren zur Herstellung von einer Kombination aus zwei passgenauen Teilen zur rotierenden Kraftübertragung **dadurch gekennzeichnet, dass** in einem elektrolytischen Bad ein Teil dieser Kombination als Anode unter Zuhilfenahme des anderen bereits vorgeformten Teils als Kathode definiert unter dreidimensionaler Führung der Kathode sowie gegenläufiger rotierender Bewegung der Teile elektrochemisch aufgelöst und **dadurch** mit der von der Kathode vorgegebenen Form definiert strukturiert wird.

2. Verfahren nach Anspruch 1 **dadurch gekennzeichnet, dass** der eine Teil der Kombination durch spanabhebende oder drahterosive Methoden oder den Einsatz von Mikroelektroden bzw. eines Mikrojetverfahrens vorstrukturiert wird und anschließend als Kathode für die Herstellung des anderen Teils der Kombination eingesetzt wird.

3. Verfahren nach Anspruch 1, **dadurch gekennzeichnet, dass** die aufeinander abgestimmten lateralen und rotierenden Bewegungen in einem Geschwindigkeitsbereich (relative Bewegungen von Kathode und Anode zueinander) von 0,1 bis 40mm/min ablaufen.

4. Verfahren nach Anspruch 1 **dadurch gekennzeichnet, dass** hochpräzise zu paarende Werkstücke mittels elektrochemischen Herstellungsverfahrens und mittels zueinander in lateraler und/oder rotierender Bewegungen der Anoden und/oder der Kathoden sowohl gleichzeitig als auch in Teilschritten jeweils hintereinander versetzt, produziert werden.

5. Elektrochemisches Verfahren nach Anspruch 1 **dadurch gekennzeichnet, dass** die Prozessparameter auf das zu bearbeitende Material abgestimmt sind und somit für Edelstähle der verwendete Elektrolyt eine Natriumhydroxidlösung als Basis benötigt, die Stromdichte im Bereich 1 bis 200 A/cm², die Pulsdauer im Bereich 0,1 bis 50ms und die Pulspausen im Bereich 0,1 bis 50ms liegen, die Elektrolytspülung mit der elektrischen Pulsung abgestimmt wird im selben Pulsbereich von 0,1 bis 50ms liegt, die angelegte Spannung (Gleich- oder Wechselspannung bzw. in Kombination) im Bereich 0,1 bis 40V liegt und aufgeprägte Pulsüberhöhungen im Bereich von -200 bis +200V liegen, die Elektrolyttemperaturen im Bereich 20°C bis 80°C liegen, die Elektrolytgeschwindigkeiten im Bereich von 1 bis 150m/min liegen und für Hartmetalle die selben Prozessparameter verwendet werden, abgestimmt und angepasst auf den einsetzbaren Elektrolyten Natriumchlorid in wässriger Form.

6. Verfahren entsprechend Anspruch 1, **dadurch gekennzeichnet dass** es zur elektrochemischen Bearbeitung von Materialien, wie z.B. Edelstähle, schwer spanabhebend bearbeitbare Stähle wie Werkzeugstähle, Kunststoffformenstähle, nicht oder schwer spanabhebend bearbeitbare Hochleistungswerkstoffe wie Hartmetalle (z.B. feindispersive WC/C-Hartmetalle aufNi- oder Co-Binderbasis,...), eingesetzt wird für die Herstellung tribologisch optimierter langlebiger zueinander gepaarter Bauteile.

7. Elektrochemisches Verfahren, **dadurch gekennzeichnet dass** es Oberflächenqualitäten mit der Rauheit zwischen Ra=0,08um und 1,0um liefert. Diese können zur Einstellung einer bestimmten Funktionalität herangezogen werden, wie z.B. leichte Reinigbarket, gute/schlechte Benetzbarkeit o.ä.

8. Elektrochemisches Verfahren entsprechend Anspruch 1, **dadurch gekennzeichnet, dass** die Oberflächen der hergestellten passgenauen Teile (Toleranzbereich 0,5um bis 20um) für den Schmiermitteleinsatz optimiert sind und die Oberfläche entsprechend strukturiert ist. Schmiermittel können sein polare Lösungen wie auch tribologische Mittel auf Basis von synthetischen oder natürlichen Ölen. Die Oberflächenstrukturierung liegt somit im Bereich 0,01 um bis 1 um um die entsprechende Benetzung zu erreichen.

9. Verfahren entsprechend Anspruch 1, **dadurch gekennzeichnet dass** es Fertigungstoleranzen im Bereich 0,1um bis 10um zulässt. Verfahren entsprechend Anspruch 1, **dadurch gekennzeichnet dass** es Paarungstoleranzen mit höchster Präzision, Rundlauf im Bereich 0,001 bis 0,02mm und Teilungsfehler bei Verzahnungssystemen von 0,001 bis 0,02mm ermöglicht.

10. Verfahren nach Anspruch 1, **dadurch gekennzeichnet, dass** die Abtragsrate von der Anode bei Edelstählen und Hartmetallen bei 0,1 bis 2kg.h⁻¹m² liegt.

11. Verfahren entsprechend Anspruch 1, **dadurch gekennzeichnet dass** es eine Strukturierung der Bauteiloberfläche zulässt und eine anschließende Behandlung mit einem Mittel für den tribologischen Einsatz ermöglicht und in "Taschen" oder "Kavitäten" der Größenordnung 1um bis 5um Stoffe wie z.B. Teflon, Graphit, MoS2 oder deren Kombination eingebracht werden kann. Diese können zur Einstellung einer bestimmten Funktionalität herangezogen werden, wie z.B. leichte Reinigbarket, gute/schlechte Benetzbarkeit o.ä.

12. Verfahren entsprechend Anspruch 1, **dadurch gekennzeichnet dass** es ein Werkzeug einsetzt, Kathode, das bei entsprechender Prozessführung in der anschließenden Anwendung als zu paarendes Gegenstück eingesetzt werden kann, der optimale Verzahnungspartner.

13. Verfahren entsprechend Anspruch 1, **dadurch gekennzeichnet dass** es im Anschluss an die elektrochemische Strukturierung galvanische Prozesse mit der gleichen Anordnung zulässt und mit angepassten Elektrolyten oder/und unter Zuhilfenahme von z.B. Hilfselektroden und zur selektiven Auslösung oder Beschichtung von Anode oder Kathode verwendet werden kann.
